# EUROPEAN PATENT SPECIFICATION

(11) **EP 2 976 520 B1**
(45) Date of publication and mention of the grant of the patent: **16.05.2018**
(21) Application number: 14771154.3
(22) Date of filing: 12.03.2014
(51) Int. Cl.: F02M 37/10, B60K 15/03, F02M 37/18, F02M 37/22, F02M 37/00

(54) **FUEL SYSTEM FOR COMBUSTION ENGINE AND A METHOD FOR CONTROLLING A FUEL SYSTEM**
BRENNSTOFFSYSTEM FÜR BRENNKRAFTMASCHINE UND VERFAHREN ZUR STEUERUNG EINES BRENNSTOFFSYSTEMS
CIRCUIT DE CARBURANT POUR MOTEUR À COMBUSTION ET PROCÉDÉ DE COMMANDE D'UN CIRCUIT DE CARBURANT

(30) Priority: 22.03.2013 SE 1350358
(43) Date of publication of application: 27.01.2016
(73) Proprietor: Scania CV AB, 151 87 Södertälje (SE)
(72) Inventor: CEDFORS, Dan, S-146 38 Tullinge (SE); FOGELBERG, Patrik, S-141 92 Huddinge (SE); JONSSON, Anders, 147 34 Tumba (SE)
(74) Representative: Scania CV AB
(86) International application number: PCT/SE2014/050301
(87) International publication number: WO 2014/148985

(56) References cited:
- WO-A1-2004/037595
- US-A- 5 806 300
- US-A1- 2002 069 856
- US-A1- 2009 159 057
- US-A1- 2010 024 770
- US-B1- 7 546 835

## Description

### BACKGROUND OF THE INVENTION AND PRIOR ART

The present invention pertains to a fuel system for a combustion engine and a method to control a fuel system according to the respective preambles of the enclosed independent patent claims. The invention also pertains to a combustion engine and a vehicle according to the dependent patent claims.

A combustion engine, such as a diesel engine or an Otto engine, is equipped with a fuel system to transport fuel from one or several fuel tanks to the combustion engine's injection system. The fuel system comprises one or several fuel pumps which may be driven mechanically by the combustion engine or be driven by an electric engine. The fuel pumps create a fuel flow and pressure to transport the fuel to the combustion engine's injection system, which supplies the fuel to the combustion engine's combustion chamber.

The fuel system often comprises only a mechanical fuel pump which is driven and controlled by the combustion engine. If this fuel pump fails or provides too low a fuel flow, the fuel supply to the combustion engine ceases and the combustion engine stops. If the fuel system comprises only an electrically driven fuel pump, the same operational disruptions may arise, whereby that the combustion engine stops. There is a risk that the vehicle may suddenly come to a standstill on or along a road, and therefore it is desirable that the fuel system comprises some type of redundancy, so that the vehicle may be moved with the help of the combustion engine. With a so-called limp home function the vehicle may in this manner be moved and transported to the nearest garage.

According to prior art, it is possible to arrange two fuel pumps driven by electric engines in a fuel system in order to achieve redundancy if one of the fuel pumps fails or provides too low a fuel flow to the combustion engine.

Document US 2003/0183205 A1 shows a fuel system for a combustion engine which comprises a low pressure pump and two fuel pumps. The first fuel pump is driven by a first electric engine and the second fuel pump is driven by a second electric engine. During normal operation, only the first electric engine and the first fuel pump are active, while the second electric engine is shut off and the second fuel pump is bypassed. Should the first electric engine or the first fuel pump fail, the second electric engine is activated to drive the second fuel pump. The first fuel pump is bypassed and fuel may still be supplied to the combustion engine. Document US 2003/0183205 A1 does not, however, show how fuel may be supplied to the combustion engine in the event the low pressure pump fails.
According to prior art, it is also possible to arrange a fuel pump driven by an electric engine in a fuel system, which comprises a fuel pump driven mechanically by a combustion engine.
Document WO 2004/037595 A1 shows a fuel system for a combustion engine which comprises two fuel pumps. One of the pumps is a fuel pump driven by a combustion engine and the other pump is a transfer pump, which transfers fuel from a first to a second fuel tank. According to one embodiment, the transfer pump may, via a three-way valve, lead fuel in series with the fuel pump driven by the combustion engine in order to increase the fuel flow during input routing of the combustion engine. The fuel pump driven by the combustion engine is not able to generate a sufficient fuel flow during the cranking of the combustion engine. Document WO 2004/037595 A1 does not, however, mention how the fuel system functions in the event the fuel pump driven by the combustion engine fails.

A fuel system according to the preamble of claim 1 and a method to control a fuel system according to the preamble of claim 12 are known from US 7 546 835 B1.

Despite prior art solutions in this area, there is a need to develop a fuel system which reduces the risk of insufficient or loss of fuel supply to the combustion engine in the event of an operational disruption.

### SUMMARY OF THE INVENTION

The objective of the present invention is to achieve a fuel system for a combustion engine which reduces the risk of insufficient or loss of fuel supply to the combustion engine in the event of an operational disruption.
Another objective of the invention is to achieve a fuel system for a combustion engine which allows for simple management of operational disruptions and enables the driver of a vehicle to move the vehicle and drive it to a garage in the event of an operational disruption.
Another objective is to achieve a fuel system which is simple and non-bulky.

These objectives are achieved with a fuel system as specified in patent claim 1. Corresponding objectives are also achieved with a method to control a fuel system as specified in patent claim 12. Corresponding objectives are also achieved with a combustion engine and a vehicle with such a fuel system.

By arranging a main feed pump controlled by an electric engine and a transfer pump controlled by an electric engine in a low pressure circuit in a fuel system, a redundancy is allowed in the fuel system compared to where only one fuel pump is arranged in the fuel system. By arranging the valve in connection with the transfer pump, so that the transfer pump is in connection with the second fuel pipe via the valve, the transfer pump may supply fuel from the second fuel tank to the second fuel pipe and further to the combustion engine. Should the main feed pump driven by an electric engine fail or provide too low a fuel flow, the transfer pump is used to transport fuel to the combustion engine. The main feed pump and the transfer pump are suitably low pressure pumps. The fuel flow and pressure which the transfer pump is able to supply to the combustion engine is sufficient for the combustion engine to be driven with full or reduced effect in order to drive the vehicle to a garage for repair. Thus a fuel system for a combustion engine is achieved, which reduces the risk of insufficient or loss of fuel supply to the combustion engine in the event of an operational disruption. Similarly, a fuel system is achieved, which provides for a so-called limp home function which enables the driver, despite a broken main feed pump, to drive the vehicle to the nearest garage.

Preferably, the main feed pump, the transfer pump and the valve are connected to a control device via a CAN bus. Thus, a compact fuel system is achieved, which is easy to control and thus provides for a correct fuel supply to the combustion engine.

By arranging sensor elements in connection with the second fuel pipe, the main feed pump's functionality may be identified. The sensor element is suitably a flow level sensor, which detects the fuel flow in the second fuel pipe, and which is connected to the control device via the CAN bus.

Alternatively, an operational disruption in the main feed pump is identified by detecting the function of the second electric engine. In the event the second electric engine ceases to function or operates with reduced power, there is a great probability that an operational disruption may occur in the main feed pump. The sensor element may in such case consist of an element that detects the function of the electric engine driving the pump, suitably by detecting the engine's power consumption.

Suitably, where an operational disruption is identified in the main feed pump, some form of indication to the driver is activated. The driver is warned and may take measures to drive the vehicle to a garage. Thus, a fuel system is achieved which allows for a simple management of an operational disruption.

Suitably, the first fuel tank is designed to hold a lesser volume than the second fuel tank. Preferably, the first fuel tank holds 20-50 litres and the second fuel tank holds 300-1,000 litres. Thus, a non-bulky fuel system is achieved.
By arranging the main feed pump in the first fuel tank, the main feed pump is protected from the environment and a natural cooling of the fuel in the first fuel tank is obtained. Alternatively, the transfer pump and/or the valve are also arranged inside the first fuel tank. With the main feed pump, the transfer pump and the valve arranged inside the first fuel tank, a non-bulky fuel system is achieved.

Suitably, the transfer pump is less complex than the main feed pump. A complex main feed pump arranged inside the first fuel tank is difficult to access for troubleshooting outside a garage. The less complex transfer pump, which is used more seldom, may feed a smaller fuel flow with a lower pressure than the main feed pump. In the event of an operational disruption of the main feed pump, however, the transfer pump is able to provide the fuel supply to the combustion engine, so that the driver may drive the vehicle to a garage for troubleshooting. Thus, a fuel system is achieved which allows for simple management by the driver of an operational disruption outside a garage.

Other advantages of the invention are set out in the detailed description below.

### BRIEF DESCRIPTION OF DRAWINGS

Below is a description, as an example, of a preferred embodiment of the invention with reference to the enclosed drawings, in which:
- Fig. 1: shows a schematic side view of a vehicle, which comprises a fuel system for a combustion engine according to the present invention,
- Fig. 2: shows a circuit diagram for a fuel system according to the present invention, and
- Fig. 3: shows a flow chart of a method to control a fuel system according to the present invention.

### DETAILED DESCRIPTION OF ONE EMBODIMENT ACCORDING TO THE INVENTION

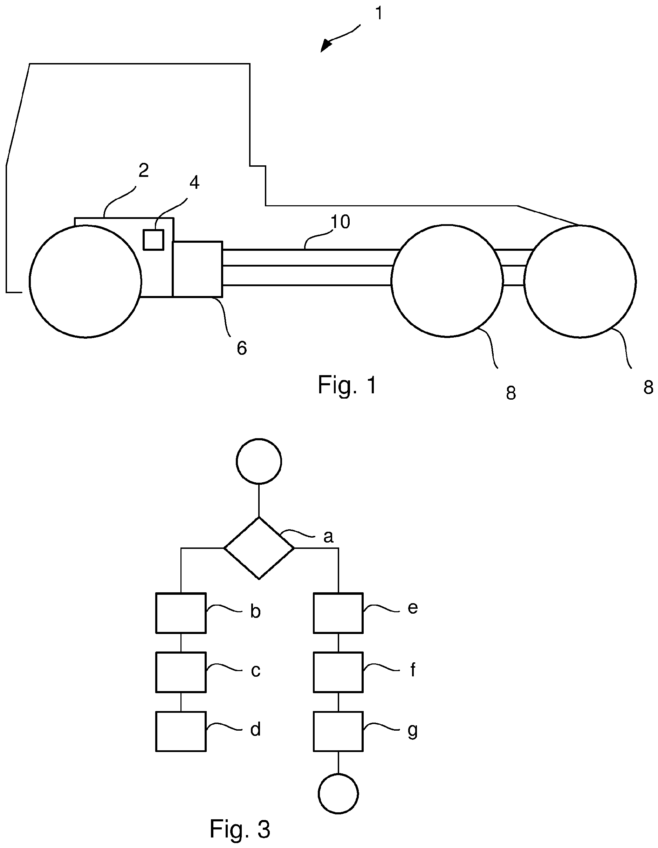

Fig. 1 shows a schematic side view of a vehicle 1, a vehicle which comprises a fuel system 4 for a combustion engine 2. The combustion engine 2 is connected to a gearbox 6, which is further connected to the vehicle's 1 driving wheels 8 via a transmission. The vehicle also comprises a chassis 10.

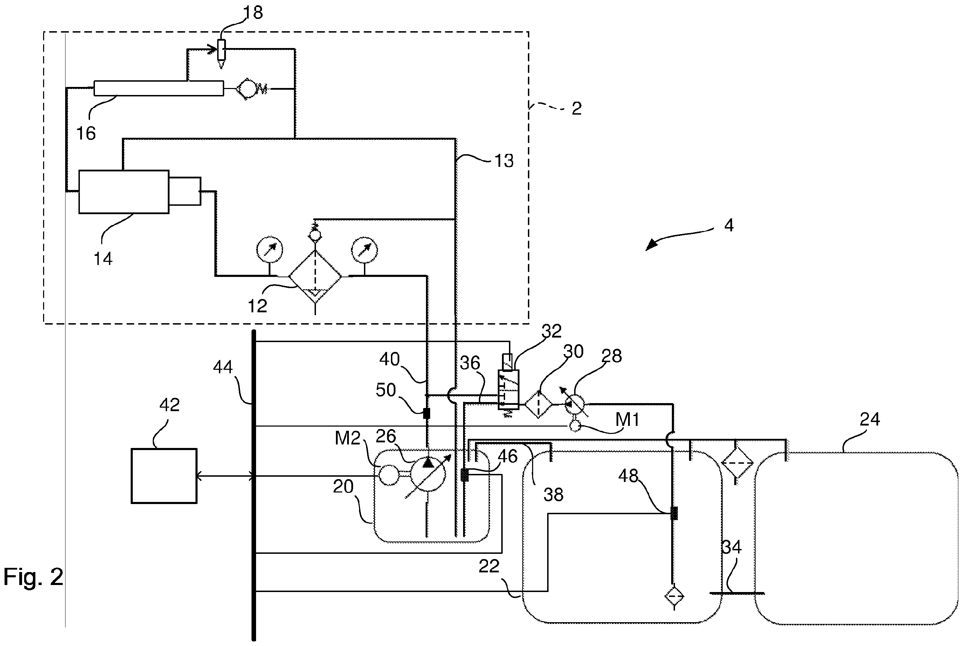

Fig. 2 shows a coupling diagram for the fuel system 4. The fuel system 4 is of the type which is also known as a common rail and comprises several components of which one main fuel filter 12, a high pressure pump 14, an accumulator in the form of a so-called common rail 16, and an injection system 18 schematically displayed in the form of a fuel injector are arranged in the combustion engine 2. Alternatively, the fuel system may be replaced by another form of an injection system, e.g. a piezo or a unit injection system. The fuel system 4 also comprises a first fuel tank 20, a second fuel tank 22, a third fuel tank 24, a main feed pump 26, a transfer pump 28, a pre-filter 30, and a valve 32. These components may be arranged at the vehicle's chassis 10. The main fuel filter 12 is arranged downstream of the main feed pump 26 and upstream of the high pressure pump 14 in the fuel system 4. The main fuel pump 26 is a low pressure pump which supplies the high pressure pump 14 with fuel at a low pressure. Furthermore, the fuel system 4 comprises a return flow line 13, through which superfluous fuel returns from the injection system 18, the common rail 16, the high pressure pump 14, and the main fuel filter 12 back to the first fuel tank 20.

The first fuel tank 20 is designed so that it holds a lesser volume than the second fuel tank 22 and the third fuel tank 24. The second fuel tank 22 and the third fuel tank 24 hold substantially the same volume and have a self-regulating flow between each other via a connection pipe 34 arranged between the lower part of the second fuel tank 22 and the third fuel tank 24. The transfer pump 28 is according to Fig. 2 arranged between the first fuel tank 20 and the second fuel tank 22. The transfer pump 28 is driven by a first electric engine M1 and its main task is to supply fuel from the second fuel tank 22 to the first fuel tank 20 via a first fuel pipe 36. Between the first fuel tank 20 and the second fuel tank 22 an excess pipe 38 is arranged, so that fuel may be transported across from the first fuel tank 20 to the second fuel tank 22 if the first fuel tank 20 becomes overfilled. The main feed pump 26 is arranged inside the first fuel tank 20 and is thus protected from the environment and cooled by the fuel. The main feed pump 26 is driven by a second electric engine M2 and feeds the fuel from the first fuel tank 20 via a second fuel pipe 40 through the main fuel filter 12 and further to the high pressure pump 14. The fuel is then fed, at a high pressure, to the common rail 16 and further along to the injection system 18. The main feed pump 26 and the transfer pump 28 are controlled by a control device 42 via a CAN bus 44.

The pre-filter 30 is arranged downstream of the transfer pump 28 and prefilters the fuel which is fed from the second fuel tank 22. The valve 32 is arranged downstream of the pre-filter 30 and comprises an inlet connected with the transfer pump 28, a first outlet connected with the first fuel pipe 36, and a second outlet connected with the second fuel pipe 40. The valve 32 is connected to the CAN bus 44, and is at an initial position controlled so that the transfer pump 28 is connected with the first outlet and is thus connected with the first fuel pipe 36. In this initial position, the transfer pump 28 will thus feed fuel from the second fuel tank 22 to the first fuel tank 20. In the first fuel tank 20, a first level sensor 46 is arranged to identify the fuel level in the first fuel tank 20. A second level sensor 48 is arranged in the second fuel tank 22 to identify the fuel level in the second fuel tank 22. The first level sensor 46 and the second level sensor 48 are connected to the CAN bus 44 and the control device 42, which controls the transfer pump 28 and the main feed pump 26.

A flow level sensor 50 is arranged in connection with the second fuel pipe 40. The flow level sensor 50 identifies the fuel flow in the second fuel pipe 40 and may thus determine whether there is an operational disruption in the main feed pump 26. It is also possible to identify an operational disruption in the main feed pump 26 through an element arranged for this purpose in order to detect the function of the second electric engine M2. In the event the second electric engine M2 ceases to function or operates with reduced power, there is a great probability that an operational disruption may occur in the main feed pump 26. An operational disruption in the second electric engine may be detected with an element designed for this purpose by detecting the engine's power consumption. In the event of an operational disruption or downtime of the main feed pump 26, the valve 32 is controlled to a second position, so that the transfer pump 28 is in connection with the second outlet and thus the second fuel pipe 40. The transfer pump 28 thus feeds fuel from the second fuel tank 22 to the second fuel pipe 40, downstream of the main feed pump 26, and further to the combustion engine 2. The fuel flow and pressure which the transfer pump 28 is able to supply to the combustion engine 2 is sufficient for the combustion engine 2 to be driven with full or reduced effect in order to drive the vehicle to a garage for repair. In one embodiment, the control device 42 may, with knowledge about the engine's average fuel consumption and the engine's fuel requirement, calculate a distance which the vehicle may drive in limp home function and present this available distance to the driver. In order to extend this distance, the control device may be designed to initiate a shut-off of some of the engine's attachments, such as air conditioning units and similar, in order to reduce the engine's fuel consumption.

Fig. 3 shows a flow chart of a method to control the fuel system 4. The method comprises the step (a) to identify the functionality of the main feed pump 26. Where the main feed pump 26 has a good functionality, the method comprises the step (b) to control the valve 32, which is arranged downstream of the transfer pump 28, so that it is arranged in a first position, which means the transfer pump 28 is connected to the first fuel pipe 36. Where the main feed pump 26 has a good functionality, the method comprises the step (c) to supply the first fuel tank 20 with fuel by driving the transfer pump 28 with the first electric engine M1 to feed fuel from the second fuel tank 22 via the first fuel pipe 36 to the first fuel tank 20. The method also comprises the step (d) to supply the combustion engine 2 with fuel by driving the main feed pump 26 with the second electric engine M2 to feed fuel from the first fuel tank 20 through the second fuel pipe 40 to the combustion engine 2.

In the event an operational disruption in the main feed pump 26 is identified, the method comprises the step (e) to indicate to the driver that an operational disruption has been identified, and the step (f) to control the valve 32 to a second position, which allows the transfer pump 28 to be connected with the second fuel pipe 40. Where an operational disruption has been identified in the main feed pump 26, the method comprises the step (g) to supply the combustion engine 2 with fuel by driving the transfer pump 28 with the first electric engine M1 to feed fuel from the second fuel tank 22 to the second fuel pipe 40 and the combustion engine 2.

Indication of an identified operational disruption may in a further developed embodiment comprise an indication to the driver of the available driving distance that a vehicle may be driven. In such a case, the method may comprise a step for the calculation of an available driving distance based on the known fuel consumption. Similarly, in a combustion engine that is used in other applications, a remaining operating time for the combustion engine when driven with an indicated operational disruption may be presented. In such a case, the method may comprise a step for the calculation of a remaining operating time.

In a further developed embodiment in the event of an indication of an identified operational disruption, the method may comprise a step which reduces the engine's fuel consumption by initiating a shut-off of certain attachments driven by the engine, e.g. a compressor for air conditioning.

The components and features specified above may within the framework of the invention be combined between different embodiments specified.

## Claims

1. Fuel system for a combustion engine (2), the fuel system (4) of which comprises a first fuel tank (20), a second fuel tank (22), a first fuel pipe (36) arranged in connection with the first fuel tank (20) and the second fuel tank (22), a second fuel pipe (40) arranged in connection with the first fuel tank (20), a main feed pump (26) and a transfer pump (28), where the main feed pump (26) is arranged to feed fuel from the first fuel tank (20) through the second fuel pipe (40), and in which the transfer pump (28) is arranged to feed fuel from the second fuel tank (22) to the first fuel tank (20) via the first fuel pipe (36), wherein a first electric engine (M1) is arranged to drive the transfer pump (28), a second electric engine (M2) is arranged to drive the main feed pump (26), and that a valve (32) is arranged downstream of the transfer pump (28), in which the valve (32) has an inlet in connection with the transfer pump (28), a first outlet in connection with the first fuel pipe (36), **characterised in that** the valve (32) has a second outlet in connection with the second fuel pipe (40), so that the transfer pump (28) is connected with the first fuel pipe (36) when the valve (32) is arranged in a first position, and so that the transfer pump (28) is connected with the second fuel pipe (40) when the valve (32) is arranged in a second position, where the transfer pump (28) transports fuel to the combustion engine (2) when the main feed pump (26) fails or provides too low a fuel flow.

2. Fuel system according to claim 1, **characterised in that** the main feed pump (26) is arranged inside the first fuel tank (20).

3. Fuel system according to any of claims 1 or 2, **characterised in that** the transfer pump (28) is arranged inside the first fuel tank (20).

4. Fuel system according to any of the previous claims, **characterised in that** the valve (32) is arranged inside the first fuel tank (20).

5. Fuel system according to any of the previous claims, **characterised in that** the first fuel tank (20) is designed to hold a lesser volume than the second fuel tank (22).

6. Fuel system according to any of the previous claims, **characterised in that** a main fuel filter (12) is arranged downstream of the main feed pump (26).

7. Fuel system according to any of the previous claims, **characterised in that** a sensor element (50) is so arranged that it may identify the functionality of the main feed pump (26).

8. Fuel system according to claim 7, **characterised in that** the sensor element (50) comprises a flow sensor, which is arranged in the second fuel pipe (40).

9. Fuel system according to claim 7, **characterised by** an element for detecting the function of the electric engine (M2) driving the main feed pump (26), preferably through elements for the detection of its power consumption.

10. Combustion engine (2) **characterised in that** it comprises a fuel system (4) according to any of claims 1-9.

11. Vehicle (1) **characterised in that** it comprises a fuel system (4) according to any of the claims 1-9.

12. Method to control a fuel system (4) for a combustion engine (2), the fuel system (4) of which comprises: a first fuel tank (20), a second fuel tank (22), a first fuel pipe (36) arranged in connection with the first fuel tank (20) and the second fuel tank (22), a second fuel pipe (40) arranged in connection with the first fuel tank (20), a main feed pump (26) and a transfer pump (28), where the main feed pump (26) is arranged to feed fuel from the first fuel tank (20) through the second fuel pipe (40), and where the transfer pump (28) is arranged to feed fuel from the second fuel tank (22) to the first fuel tank (20) via the first fuel pipe (36),
**characterised by** the steps to:
a) identify the functionality of the main feed pump (26),
- in the event of good functionality of the main feed pump (26);
b) control a valve (32), which is arranged downstream of the transfer pump (28), so that it is arranged in a first position, which means the transfer pump (28) is connected to the first fuel pipe (36),
c) supply the first fuel tank (20) with fuel by driving the transfer pump (28) with the first electric engine (M1) to feed fuel from the second fuel tank (22) via the first fuel pipe (36) to the first fuel tank (20),
d) feed fuel from the first fuel tank (20) through the second fuel pipe (40) by driving the main feed pump (26) with a second electric engine (M2),
- in the event of an identified operational disruption in the main feed pump (26);
e) indicate to the driver that an operational disruption has been identified,
f) control the valve (32), which is arranged downstream of the transfer pump (28), so that it is located in a second position, which means the transfer pump (28) is connected to the second fuel pipe (40),
g) feed fuel from the second fuel tank (22) through the second fuel pipe (40) by driving the transfer pump (28) with the first electric engine (M1).

## Patentansprüche

1. Kraftstoffsystem für einen Verbrennungsmotor (2), wobei das Kraftstoffsystem (4) einen ersten Kraftstofftank (20), einen zweiten Kraftstofftank (22), eine erste Kraftstoffleitung (36), die in Verbindung mit dem ersten Kraftstofftank (20) und dem zweiten Kraftstofftank (22) angeordnet ist, eine zweite Kraftstoffleitung (40), die in Verbindung mit dem ersten Kraftstofftank (20) angeordnet ist, eine Haupt-Förderpumpe (26) und eine Neben-Förderpumpe (28) aufweist, wobei die Haupt-Förderpumpe (26) zur Zufuhr von Kraftstoff aus dem ersten Kraftstofftank (20) durch die zweite Kraftstoffleitung (40) eingerichtet ist, und wobei die Neben-Förderpumpe (28) zur Zufuhr von Kraftstoff aus dem zweiten Kraftstofftank (22) über die erste Kraftstoffleitung (36) in den ersten Kraftstofftank (20) eingerichtet ist, wobei ein erster Elektromotor (M1) für den Betrieb der Neben-Förderpumpe (28) und ein zweiter Elektromotor (M2) für den Betrieb der Haupt-Förderpumpe (26) angeordnet sind, und ein Ventil (32) stromabwärts der Neben-Förderpumpe (28) angeordnet ist, wobei das Ventil (32) einen Einlass, der mit der Neben-Förderpumpe (28) verbunden ist, und einen ersten Auslass aufweist, der mit der ersten Kraftstoffleitung (36) verbunden ist,
**dadurch gekennzeichnet, dass** das Ventil (32) einen zweiten Auslass aufweist, der mit der zweiten Kraftstoffleitung (40) verbunden ist, so dass die Neben-Förderpumpe (28) mit der ersten Kraftstoffleitung (36) verbunden ist, wenn das Ventil (32) eine erste Position einnimmt, und die Neben-Förderpumpe (28) mit der zweiten Kraftstoffleitung (40) verbunden ist, wenn das Ventil (32) eine zweite Position einnimmt, in der die Neben-Förderpumpe (28) dem Verbrennungsmotor (2) Kraftstoff zuführt, wenn die Haupt-Förderpumpe (26) ausfällt oder einen zu geringen Kraftstoffdurchfluss bereitstellt.

2. Kraftstoffsystem (4) nach Anspruch 1, **dadurch gekennzeichnet, dass** die Haupt-Förderpumpe (26) im Inneren des ersten Kraftstofftanks (20) angeordnet ist.

3. Kraftstoffsystem nach Anspruch 1 oder 2, **dadurch gekennzeichnet, dass** die Neben-Förderpumpe (28) im Inneren des ersten Kraftstofftanks (20) angeordnet ist.

4. Kraftstoffsystem nach einem der vorigen Ansprüche, **dadurch gekennzeichnet, dass** das Ventil (32) im Inneren des ersten Kraftstofftanks (20) angeordnet ist.

5. Kraftstoffsystem nach einem der vorigen Ansprüche, **dadurch gekennzeichnet, dass** der erste Kraftstofftank (20) für die Aufnahme eines kleineren Volumens ausgeführt ist als der zweite Kraftstofftank (22).

6. Kraftstoffsystem nach einem der vorigen Ansprüche, **dadurch gekennzeichnet, dass** ein Haupt-Kraftstofffilter (12) stromabwärts der Haupt-Förderpumpe (26) angeordnet ist.

7. Kraftstoffsystem nach einem der vorigen Ansprüche, **dadurch gekennzeichnet, dass** ein Sensorelement (50) so eingerichtet ist, dass es die Funktionalität der Haupt-Förderpumpe (26) identifizieren kann.

8. Kraftstoffsystem nach Anspruch 7, **dadurch gekennzeichnet, dass** das Sensorelement (50) einen Durchflusssensor aufweist, der in der zweiten Kraftstoffleitung (40) angeordnet ist.

9. Kraftstoffsystem nach Anspruch 7, **gekennzeichnet durch** ein Element zum Detektieren der Funktion des Elektromotors (M2) für den Betrieb der Haupt-Förderpumpe (26), vorzugsweise durch Elemente zur Detektion seiner Leistungsaufnahme.

10. Verbrennungsmotor (2), **dadurch gekennzeichnet, dass** er ein Kraftstoffsystem (4) nach einem der Ansprüche 1 bis 9 aufweist.

11. Fahrzeug (1), **dadurch gekennzeichnet, dass** es ein Kraftstoffsystem (4) nach einem der Ansprüche 1 bis 9 aufweist.

12. Verfahren zum Steuern eines Kraftstoffsystems (4) für einen Verbrennungsmotor (2), wobei das Kraftstoffsystem (4) aufweist: einen ersten Kraftstofftank (20), einen zweiten Kraftstofftank (22), eine erste Kraftstoffleitung (36), die in Verbindung mit dem ersten Kraftstofftank (20) und dem zweiten Kraftstofftank (22) angeordnet ist, eine zweite Kraftstoffleitung (40), die in Verbindung mit dem ersten Kraftstofftank (20) angeordnet ist, eine Haupt-Förderpumpe (26) und eine Neben-Förderpumpe (28), wobei die Haupt-Förderpumpe (26) zur Zufuhr von Kraftstoff aus dem ersten Kraftstofftank (20) durch die zweite Kraftstoffleitung (40) eingerichtet ist, und wobei die Neben-Förderpumpe (28) zur Zufuhr von Kraftstoff aus dem zweiten Kraftstofftank (22) über die erste Kraftstoffleitung (36) in den ersten Kraftstofftank (20) eingerichtet ist, **gekennzeichnet durch** die Schritte:
a) Identifizieren der Funktionalität der Haupt-Förderpumpe (26),
- bei guter Funktionalität der Haupt-Förderpumpe (26):
b) Steuern eines Ventils (32), das stromabwärts der Neben-Förderpumpe (28) so angeordnet ist, dass es eine erste Position einnimmt, was bedeutet, dass die Neben-Förderpumpe (28) mit der ersten Kraftstoffleitung (36) verbunden ist,
c) Zuführen von Kraftstoff in den ersten Kraftstofftank (20) durch den Betrieb der Neben-Förderpumpe (28) mittels dem ersten Elektromotors (M1), um dem ersten Kraftstofftank (20) Kraftstoff aus dem zweiten Kraftstofftank (22) über die erste Kraftstoffleitung (36) in einer ersten Richtung zuzuführen,
d) Zuführen von Kraftstoff aus dem ersten Kraftstofftank (20) durch die zweite Kraftstoffleitung (40) durch den Betrieb der Haupt-Förderpumpe (26) mittels eines zweiten Elektromotors (M2),
- im Fall einer identifizierten Betriebsstörung der Haupt-Förderpumpe (26):
e) Meldung an den Fahrer, dass eine Betriebsstörung identifiziert worden ist,
f) Steuern des Ventils (32), das stromabwärts der Neben-Förderpumpe (28) so angeordnet ist, dass es eine zweite Position einnimmt, was bedeutet, dass die Neben-Förderpumpe (28) mit der zweiten Kraftstoffleitung (40) verbunden ist,
g) Zuführen von Kraftstoff aus dem zweiten Kraftstofftank (22) durch die zweite Kraftstoffleitung (40) durch Antreiben der Neben-Förderpumpe (28) mittels des ersten Elektromotors (M1).

## Revendications

1. Circuit de carburant pour un moteur à combustion (2), lequel circuit de carburant (4) comprend un premier réservoir de carburant (20), un deuxième réservoir de carburant (22), un premier tuyau de carburant (36) connecté au premier réservoir de carburant (20) et au deuxième réservoir de carburant (22), un deuxième tuyau de carburant (40) connecté au premier réservoir de carburant (20), une pompe d'alimentation principale (26) et une pompe de transfert (28), la pompe d'alimentation principale (26) étant agencée pour amener du carburant depuis le premier réservoir de carburant (20) via le deuxième tuyau de carburant (40), et la pompe de transfert (28) étant agencée pour amener du carburant depuis le deuxième réservoir de carburant (22) vers le premier réservoir de carburant (20) via la premier tuyau de carburant (36),
dans lequel un premier moteur électrique (M1) est agencé pour commander la pompe de transfert (28), un deuxième moteur électrique (M2) est agencé pour commander la pompe d'alimentation principale (26), et dans lequel une vanne (32) est disposée en aval de la pompe de transfert (28), laquelle vanne (32) a un orifice d'admission connecté à la pompe de transfert (28), un premier orifice de sortie connecté au premier tuyau de carburant (36),
**caractérisé en ce que** la vanne (32) a un deuxième orifice de sortie connecté au deuxième tuyau de carburant (40), de telle sorte que la pompe de transfert (28) soit connectée au premier tuyau de carburant (36) lorsque la vanne (32) est agencée dans une première position, et que la pompe de transfert (28) soit connectée au deuxième tuyau de carburant (40) lorsque la vanne (32) est agencée dans une deuxième position, la pompe de transfert (28) transportant du carburant jusqu'au moteur à combustion (2) lorsque la pompe d'alimentation principale (26) ne fournit pas de carburant ou fournit un débit de carburant trop faible.

2. Circuit de carburant selon la revendication 1, **caractérisé en ce que** la pompe d'alimentation principale (26) est disposée à l'intérieur du premier réservoir de carburant (20).

3. Circuit de carburant selon l'une quelconque des revendications 1 ou 2, **caractérisé en ce que** la pompe de transfert (28) est disposée à l'intérieur du premier réservoir de carburant (20).

4. Circuit de carburant selon l'une quelconque des revendications précédentes, **caractérisé en ce que** la vanne (32) est disposée à l'intérieur du premier réservoir de carburant (20).

5. Circuit de carburant selon l'une quelconque des revendications précédentes, **caractérisé en ce que** le premier réservoir de carburant (20) est conçu pour contenir un volume moindre que le deuxième réservoir de carburant (22).

6. Circuit de carburant selon l'une quelconque des revendications précédentes, **caractérisé en ce qu'**un filtre à carburant principal (12) est disposé en aval de la pompe d'alimentation principale (26).

7. Circuit de carburant selon l'une quelconque des revendications précédentes, **caractérisé en ce qu'**un élément capteur (50) est agencé de façon à pouvoir identifier le fonctionnement de la pompe d'alimentation principale (26).

8. Circuit de carburant selon la revendication 7, **caractérisé en ce que** l'élément capteur (50) comprend un capteur de débit, qui est disposé dans le deuxième tuyau de carburant (40).

9. Circuit de carburant selon la revendication 7, **caractérisé par** un élément pour détecter le fonctionnement du moteur électrique (M2) entraînant la pompe d'alimentation principale (26), de préférence via des éléments adaptés à détecter sa consommation d'énergie.

10. Moteur à combustion (2), **caractérisé en ce qu'**il comprend un circuit de carburant (4) selon l'une quelconque des revendications 1 à 9.

11. Véhicule (1), **caractérisé en ce qu'**il comprend un circuit de carburant (4) selon l'une quelconque des revendications 1 à 9.

12. Procédé de commande d'un circuit de carburant (4) pour un moteur à combustion (2), lequel circuit de carburant (4) comprend : un premier réservoir de carburant (20), un deuxième réservoir de carburant (22), un premier tuyau de carburant (36) connecté au premier réservoir de carburant (20) et au deuxième réservoir de carburant (22), un deuxième tuyau de carburant (40) connecté au premier réservoir de carburant (20), une pompe d'alimentation principale (26) et une pompe de transfert (28), la pompe d'alimentation principale (26) étant agencée pour amener du carburant depuis le premier réservoir de carburant (20) via le deuxième tuyau de carburant (40), et la pompe de transfert (28) étant agencée pour amener du carburant depuis le deuxième réservoir de carburant (22) vers le premier réservoir de carburant (20) via la premier tuyau de carburant (36),
**caractérisé par** les étapes :
a) identifier le fonctionnement de la pompe d'alimentation principale (26),
- en cas de bon fonctionnement de la pompe d'alimentation principale (26) :
b) piloter une vanne (32), qui est disposée en aval de la pompe de transfert (28), de façon qu'elle soit agencée dans une première position, ce qui signifie que la pompe de transfert (28) est connectée au premier tuyau de carburant (36),
c) alimenter le premier réservoir de carburant (20) en carburant en commandant la pompe de transfert (28) au moyen du premier moteur électrique (M1) de façon qu'elle amène du carburant depuis le deuxième réservoir de carburant (22) vers le premier réservoir de carburant (20), via le premier tuyau de carburant (36),
d) amener du carburant depuis le premier réservoir de carburant (20) via le deuxième tuyau de carburant (40) en commandant la pompe d'alimentation principale (26) au moyen d'un deuxième moteur électrique (M2),
- en cas de perturbation opérationnelle identifiée dans la pompe d'alimentation principale (26) :
e) indiquer au conducteur qu'une perturbation opérationnelle a été identifiée,
f) piloter la vanne (32), qui est disposée en aval de la pompe de transfert (28), de façon qu'elle se trouve dans une deuxième position, ce qui signifie que la pompe de transfert (28) est connectée au deuxième tuyau de carburant (40),
g) amener du carburant depuis le deuxième réservoir de carburant (22) via le deuxième tuyau de carburant (40) en commandant la pompe de transfert (28) au moyen du premier moteur électrique (M1).
